# EUROPEAN PATENT SPECIFICATION

(11) **EP 0 660 007 B1**
(45) Date of publication and mention of the grant of the patent: **04.03.1998**
(21) Application number: 94120475.2
(22) Date of filing: 22.12.1994
(51) Int. Cl.: F16F 9/00, F16F 9/05, F16F 9/04, B29D 22/00, B29C 33/42

(54) **Flexible membrane for air springs and moulding equipment for its manufacturing**
Flexible Membrane für Luftfedern und Formgerät zu ihrer Herstellung
Membrane flexibler pour ressorts à air et ensemble de moulage pour sa fabrication

(30) Priority: 23.12.1993 IT MI932714
(43) Date of publication of application: 28.06.1995
(73) Proprietor: C.F. GOMMA S.p.A., 25050 Passirano (Brescia) (IT)
(72) Inventor: Besana, Marco, I-20052 Milano (IT); Simonini, Enzo, I-20092 Cinisello Balsamo, Milano (IT); Zucchetti, Giampiero, I-20049 Concorezzo, Milano (IT)
(74) Representative: Righetti, Giuseppe

(56) References cited:
- DE-A- 3 318 060
- FR-A- 1 210 467
- GB-A- 2 158 388
- US-A- 2 192 355
- US-A- 2 962 757
- US-A- 3 030 252

## Description

The present invention relates to a flexible air springs membrane and to a moulding equipment for the manufacturing of said flexible membranes.

The flexible air springs membrane of the present invention comprises: a central portion with a substantially cylindrical tubular or conical configuration, and two terminal caps extending, respectively, from opposite parts on the continuation of the central portion and presenting each one, an arched profile configuration converging towards the geometrical axis of the membrane itself.

The moulding equipment for the manufacturing of the above mentioned membrane comprises:
- an openable mould, inside which a moulding cavity has been defined, that presents a substantially cylindrical or conic central portion, from whose opposite extremities two arched profile terminal portions extend, converging towards the geometrical axis of the cavity itself;
- a supporting rod extending coaxially throughout the moulding cavity defined in the openable mould;
- an inflatable tubular chamber with the opposite extremities rigidly engaged with the supporting rod;
- fluid feed equipment communicating with the interior of the inflatable chamber and designed to send to the latter the fluid operative under pressure to bring it from a deflated condition to an inflated condition in which the chamber itself acts against a processing membrane, previously introduced in the mould for adherence against the mould cavity walls;
- first air flow-off equipment leading into the mould cavity for the outflow of the air interposed between the processing membrane and the cavity walls when said chamber is brought to an inflated condition; and
- second air draw-off equipment for the outflow of the air interposed between the inflatable chamber and the processing membrane when the chamber is brought to an inflated condition.

As it is known, the flexible membranes usually used in the manufacturing of air springs or pneumatic suspensions and similar ones, are generally processed in the shape of an elastomeric material tubular sleeve, incorporating a textile stratum resistant to traction and presenting terminally two anchorage beads, each one tightly engaged with a corresponding structural component of the air spring.

Generally, in said tubular sleeve, a cylindrical central portion is defined from which, two terminal caps, manufactured according to an arched profile, depart in opposite directions converging towards the membrane geometric axis and bearing terminally said beads.

In the manufacturing process of said membranes a moulding phase and simultaneous vulcanisation is undertaken, during which the structural and dimensional stabilisation of the membrane itself is effected. This phase is undertaken in an openable mould defining a mould cavity counter-templated to the membrane to be obtained, and coaxially crossed by a supporting rod joined with an inflatable elastomeric chamber. Said chamber has its extremity edges axially distanced and tightly engaged on the supporting rod itself.

This chamber is inflatable through steam inlet or other fluid operative under pressure, for application to the manufacturing membrane, previously introduced into the mould, of homogeneous forces distributed for determining adherence to the mould cavity surfaces.

More precisely, during the dilation of the inflatable chamber the thrusting action on the processing membrane is firstly applied to the median longitudinal development circumference zone, and subsequently it is extended progressively to the opposite extremeties of the membrane itself.

During this phase, the air which is inevitably present between the surfaces of the membrane and the mould cavity, as well as between the membrane itself and the inflatable chamber, is progressively conveyed in connection with the terminal membrane caps where stress means are fitted so as to allow the air evacuation outside the mould.

Different kind of membranes for air springs are known and disclosed in literature, so, for instance, the patent US 3.549.142 discloses an air spring membrane where the terminal caps bear a set of circumferential ribs having the substantial function of improving the flexibility characteristics of the membrane in working conditions.

The patents US 4.564.177 and US 4.715.588 disclose flexible membranes in which, with a view to improving the working conditions of the terminal caps provided with ribs in a circumferential sense, further ribs are obtained in the same terminal caps, following meridian or longitudinal lines. In particular, the membrane disclosed by the patent US 4.715.588, these ribs oriented along meridian or longitudinal lines have a slightly higher height with regard to the circumferential or transversal ribs. The presence of said further ribs let solve operational sound problems as well, deriving from direct impact of transversal ribs on the rolling surfaces which are generally arranged in air springs.

In order to channel and expel the air which, following dilation of the inflatable chamber, is conveyed in connection with the terminal caps, it has been tried to exploit the meridian or longitudinal grooves, arranged in the mould cavity to form the corresponding ribs on the membrane terminal caps.

This attempt has not been successful because to obtain an efficient elimination of the air would entail grooves of remarkable dephts, which would create such heights on the membrane ribs as to compromise good flexibility. The efficient elimination of the air would furthermore be notably compromised by the presence of transversal grooves in the mould cavity, whose opposite extremities, at the cross-points of the longitudinal grooves, would be instantaneously filled with the elastomeric material before expulsion of the air from the same. The transversal grooves are also necessary for the formation, on the membrane, of transversal ribs to remedy the stiffening problems induced by the presence of longitudinal ribs.

It has now been found by the Applicant that an excellent elimination of the air from the mould, together with optimum operational characteristics of the finished membrane, particularly with reference to flexibility, adherence to the rolling surfaces, and absence of processing noises are obtained by arranging ribs into the mould cavity in connection with the membrane terminal caps, so as to cause on the finished membrane, a plurality of pits placed alongside each other consecutively and in contact with each other, each one circumscribed by ribs all along any direction in a broken-line sequence.

These pits substantially have polygonal shapes with each rectilinear or curvilinear side being defined by one of said ribs delimited between two extreme vertexes.

Therefore the subject matter of the present invention is a flexible membrane for air springs comprising:
- a central portion having substantially a cylindrical tubular configuration; and
- two terminal caps extending from opposite parts respectively, along continuation of the central portion and bearing each one an arched profile configuration converging towards the geometrical axis of the membrane itself, where:
   a) at least one of said terminal caps has an external surface provided with ribs creating a plurality of pits substabtially poligonally-shaped, positioned side by side, in contact with each other, each one circumscribed by ribs, each one of which is delimited between two vertexes;
   b) the consecutive ribs of contiguous pits along any direction, have a progress which is different from the progress of a rectilinear line;
   c) the configuration and setting of the pits is such that from any of these vertexes along any of the directions, up to one of the cap extremities, the subsequent ribbing vertexes are substantially external to a rectilinear line, materialising said any direction, and the sequence of ribs departing from said vertexes into the surrounding space towards the extremity of the cap takes on a broken line progress.

Preferably, every rib juts from said external surface according to a height between 0,4 and 0,9 mm, and presents a length of the lower side inferior to 8 mm and a width between 1mm and 3mm.

Preferably each pit shows a surface extension between 10 mm² and 20 mm² and a ratio between the total area occupied by the pits and the total area occupied by the ribs comprised between 1 and 4. Preferably each of these pits is substantially shaped into an irregular polygon, each side of it being defined by one of said ribs. The ribs define on the external surface of each cap an irregular reticular design.

According to a further characteristic of the invention, each of said terminal caps can furthermore have an internal surface provided with a plurality of auxiliary pits, positioned side by side in sequence, whose characteristics are substantially analoguous to the ribs and the pits on the external surface. The ribs of the auxiliary pits can preferably have a jut or height comprised between 0,4 mm and 1 mm, a development lower than 8 mm and a width comprised between 1 and 4 mm.

Another object of this invention is the moulding equipment for air springs flexible membranes comprising:
- an openable mould inside which a moulding cavity is defined, with a central portion substantially cylindrical, from whose opposite extremities two arched profile terminal portions extend and converge towards the geometric axis of the cavity itself;
- a supporting rod extending coaxially through the moulding cavity defined in the openable mould;
- an inflatable tubular chamber having the opposite extremities rigidly engaged to the supporting rod;
- fluid feed equipment communicating with the interior of the inflatable chamber and prearranged to send to the latter a fluid operative under pressure to lead it from a deflation condition to an inflated one in which the chamber itself acts against a processing membrane previously introduced into the mould to make it adhere to the moulding cavity walls;
- first means of air elimination flowing to that moulding cavity in order to evacuate the air interposed between the processing membrane and the cavity walls when said chamber is brought to an inflated condition;
- second means of air elimination to evacuate the air interposed between the inflatable chamber and the processing membrane when the chamber itself is brought to an inflated condition; where:
   a) in at least one of said terminal portions, said elimination means show a plurality of grooves each one of which is delimited between two cross-points;
   b) the consecutive grooves along any direction, have a progress which is different to that of the rectilinear line;
   c) the configuration and setting of the grooves is such that starting from any of said cross-points along any direction up to one of the extremity of the terminal portion, the successive grooving cross-points are substantially external to a rectilinear line materialising said any direction, and the sequence of grooves departing form such point towards the extremity assumes a broken line run.

Preferably, each groove possesses a depth between 0,4 and 1 mm and a width between 1 and 3mm.

Preferably the grooves define over each terminal portion surface, an irregular reticule design.

In a preferred embodiment, said second air elimination means comprise a plurality of auxiliary grooves distributed through the respective extremity portions shown by the inflatable chamber in proximity of each of said terminal caps, said auxiliary grooves show analogous characteristics to the grooves provided for the moulding cavity.

Further characteristics and advantages will be more evident from the following detailed description, where there is the reference to the figures of the enclosed drawings illustrating a favourite, illustrative but not restricting, air spring membrane and the manufacturing equipment for its manufacturing according to this invention.

In the figures:
- Figure 1 shows the schematic view of the cut section of an air spring membrane during a vulcanisation phase inside a mould;
- Figure 2 shows a cut view illustrating the development of one of the membrane terminal cap surfaces.

With reference to the mentioned figures with 1 it has been indicated on the whole an air spring membrane, according to the present invention.

Membrane 1, conventionally produced in elastomeric material incorporating a reinforced textile insert, (which has not been represented as it is well-known and conventional) shows a central portion 2, with a configuration substantially cylindrical or conic upon which two terminal caps 3 on respectively opposite sides are extended, each one presenting an arched profile configuration converging towards the geometric axis of the membrane 1 as a whole. In connection with the respective anchorage bead 3a, the terminal caps 3 culminate. Said beads 3a incorporate, if necessary, inextensible metallic bead wires 4, prearranged so as to be operatively and tightly engaged to relevant mechanical parts provided in the air springs to which the membrane will be associated.

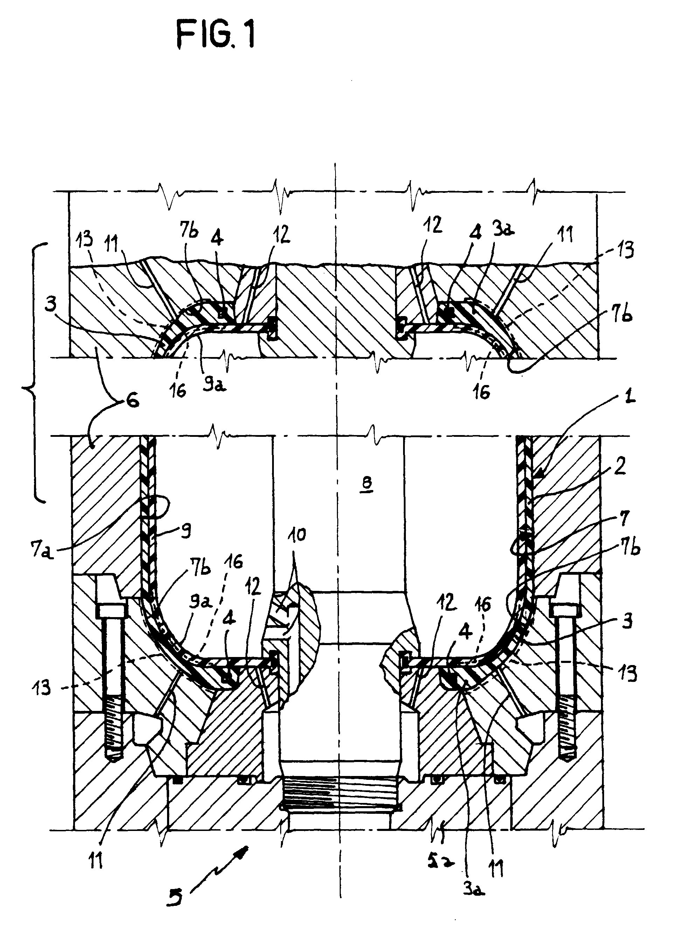

As it is known, after having effected the coupling between the elastomeric material, the resistant textile stratum, the metallic bead wires 4 and possibly other processing membrane 1 components, the latter undergoes a moulding and vulcanisation phase after which the dimensional and structural stabilisation of the membrane itself is determined. This vulcanisation phase is carried out in a moulding equipment indicated with 5 in Fig. 1.

The moulding equipment 5 comprises conventionally a base 5a bearing a mould 6 of the openable type, inside which a moulding cavity 7 is defined and counter-templated to the membrane 1 to be obtained. The moulding cavity 7 presents therefore a central portion 7a which is substanitally cylindrical or conic, and from whose opposite extremities two arched profile terminal portions 7b, are extended and converge towards the geometric axis of the cavity itself.

Through the moulding cavity 7, a supporting rod 8 is extended, fixed to the base 5a of the equipment 5. Said supporting rod 8 engages tightly and rigidly, with axially spaced positions, the opposite extremities of an inflatable tubular chamber 9, manufactured in elastomeric material. Inside the inflatable chamber 9, for example through the supporting rod 8, flow one or more inlet ducts 10 being part of the fluid feed means, (not illustrated in detail as they are known and conventional). Said inlet ducts 10 are prearranged in order to send the chamber itself a fluid operational under pressure, like for instance, steam. After the inlet of the operational fluid inside the inflatable chamber 9, the latter is brought from a deflated condition in which it adheres substantially against the supporting rod 8 surfaces, to an inflated condition in which, as it can be seen in Fig. 1, the chamber 9 acts against the processing membrane 1, previously introduced into the mould 6, to make it adhere prefectly to the moulding cavity walls 7.

During the inflation, the chamber 9 tends to dilate more in the median zones of its longitudinal development.

Thus, the action exerted by the chamber 9 on the membrane 1 will take place at first in circumferential manner in the median zone of the longitudinal development of the membrane itself, and subsequently, it will extend progressively into opposite directions towards the terminal caps 3, until it covers the whole surface development of the mebrane itself. During this transitory phase of dilation of the inflatable chamber 9, the air present between the membrane 1 and the moulding cavity walls 7, as well as between the membrane itself and the inflatable chamber 9, is progressively conveyed in connection with the terminal portions 3. The outlet of air form the mould 6 is operated through two kind of flow-off channelling 11 and 12. The first flow-off channelling flow into the moulding cavity 7 and are obtained in connetcion to the extremity portions 7b of said cavity and are part of the first means of flow-off for air outlet present between membrane 1 and the cavity walls.

The second flow-off channelling 12, obtained in proximity to the insertion of the inflatable chamber 9 on the supporting rod 8, are part of the second means of flow-off to determine the outlet of the air trapped between membrane 1 and the inflatable chamber 9. As for the first and second means of flow-off mentioned above only the parts which are relevant to the invention purposes are illustrated.

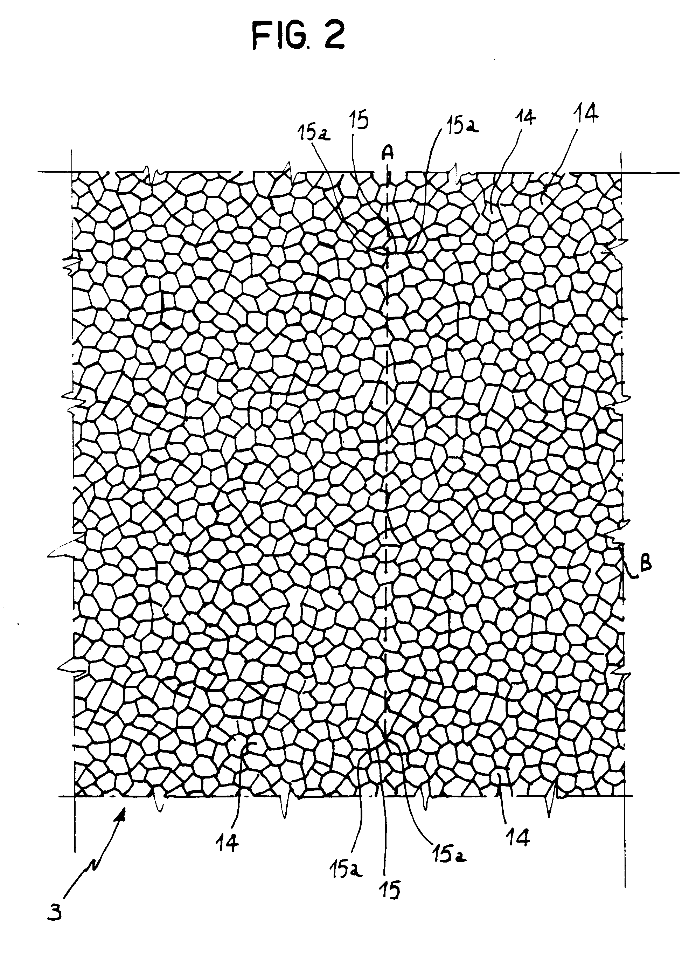

According to the present invention, the first means of air flow-off take into account that in proximity of each terminal portions 7b of the moulding cavity 7, a plurality of grooves is obtained, for instance, through a usual milling process or preferably, through photoengravure, shown as an indication by the broken lines 13 in Fig. 1 . The shape and geometrical distribution of said broken lines 13 can be easily deduced from Fig. 2, showing as an indication, the surface aspect given to the terminal caps 3 of the membrane 1, because of the presence of the grooves themselves.

As can be seen in Fig. 2, the presence of the grooves 13 creates on the external surface of each terminal cap 3, a pitted structure comprising a plurality of pits 14, positioned in sequence and in contact side by side, each one circumscribed by a plurality of ribs 15, each one of which being formed through the presence of one of the grooves 13.

Each rib 15, and therefore, each groove 13, is delimited in its longitudinal development, between two extreme vertexes or points of conjunction 15a with other ribs 15 or, respectively, with contiguous grooves 13. More precisely, in proximity to each vertex or point of conjunction 15a, depart, for example from each rib 15, consecutive ribs of contiguous pits, along any direction in a progress different form that of a rectilinear line.

In other words, grooves 13 and ribs 15 produced by them, are distributed substantially in homogeneous manner so as to define, respectively on the terminal portion 7b of the moulding cavity 7 and on the external surface of the terminal cap 3, a reticular drawing, preferably of an irregular type.

In particular the configuration and setting of the pits is such that starting from anyone of the mentioned vertexes 15a along any direction up to any of the extremities of the cap, for instance A in figure 2, the subsequent ribbing or grooving vertexes are substantially external to a rectilinear line between 15a and A materialising said any direction, and the sequence of ribs or grooves departing from that point towards the extreme takes up the course of a broken line. The cited configuration is of the same type even along a direction different from A, for instance, along 15a-B direction, where B is a point laterally designed in figure 2.

The word "substantially" is used to indicate the number of vertexes of the ribbing or grooving crossing points, which are not found along line 15a-A, but rather on the side, is remarkably bigger than that of the vertexes which, casually and in absence of any predetermined order, are found along such line as it is clearly illustrated in figure 2.

The ribs delimiting the pits follow one another strating from a vertex towards the surrounding area according to a branched course. Similarly to grooves 13.

In practice, a grooving 13 system is originated, which, like many other capillaries lost in any direction, supply an infinite number of escaping avenues for the air compressed between the membrane and the mould cap.

In other words, the grooves could take up an aspect similar to that which could be observed by looking at a ground broken and divided into sods of irregular shape surrounded by various grooves as those produced by drought in a manner all together incidental. In practice, every pit 14 obtained on the caps 3 results as substanitally formed like a polygon, preferablky irregular, each side of which is defined by one of the grooves 15. Group of pits in contact among themselves can be seen in figure 2, some of hexagonal shape, others like pentagons, others of quadrilateral or of other polygonal shapes mostly irregular associated among themselves with such a mosaic configuration that, the successive grooves, originate the mentioned aspect of a line, which separates itself from a rectilinear line, to take up the course of a broken line formed by successive inclinations relative to a rectilinear line. The angles formed by the ribs relatively to a line passing by one of their vertexes and parallel to the line 15a-A, can be preferably comprised, for example, between 15 and 65 degrees. Further production examples are those deriving from the mosaic of figure 2, with a snake or lizard skin configuration. It is not to exclude, however, as far as the invention is concerned, the possible positioning of the grooves 13, and therefore, the corresponding ribs 15,according to a predisposed reticle to define pits with a regular polygonal shape, regular hexagonal as example, or irregular drawn consecutively near.

According to this invention, the reciprocal disposition and the dimensional parameters of the grooves 13, and therefore, of ribs 15 produced by them, result such as to make sure that the air conveyed in proximity of the terminal caps 3 at the end of the inflation of chamber 9, is efficiently evacuated through the first blow-off conduits 11. Furthermore and above all, the reciprocal orientation and dimensional parameters of grooves 13 are such as to make that even in case where air inclusion should occur between the terminal portion 7b of the moulding cavity 7 and the terminal caps 3, the air would in any case be homogeneously distributed among the grooves 13 ans spread according to a vast superficial extension, in such a way to avoid producing a qualitative and aesthetic decay on the finished product. The possible air inclusions, homogeneously distributed would bring, as a matter of fact, a reduction of the ribbing 15 height according to a vast superficial portion of the corresponding terminal cap 3, without in any way altering the membrane qualitative characteristics.

In this matter, it is preferable that every groove 13 depth and, therefore, the height according to which every ribs 15 protrudes, in the absence of air inclusions, from the cap external surface, should have a value between 0,4 and 0,9 mm. Any values above those as indicated can be used, but in some cases could determine an excessive flexionable stiffening of the membrane 1. Vice versa, inferior values could be insufficient for the purpose of an efficient air evacuation.

Moreover, every groove 13, and therefore, every rib 15, preferably show a longitudinal development below 8mm, because values above that could determine air inclusions inside the single grooves, and, therefore, undesired interruptions of the longitudinal development of the produced ribs 15. The width of the grooves 13 and of the corresponding ribs 15 is preferably between 1mm and 3mm.

Values outside the range indicated could determine, also in this case, air inclusions in the single grooves 13.

In the membrane 1 the ratio between the global area occupied among the pits 14 and the global area occupied by the ribs 15 is preferably comprised between 1 and 4.

Due to the above mentioned characteristics, the device of this invention allows for an efficient air evacuation without the execution of extra and slow finishing operations at the end of the vulcanisation. Moreover, the flexible membrane 1 obtained presents excellent qualitative characteristics in terms of flexibility, thanks to the presence of pits 14 in connection with relatively reduced ribbing 15 height.

Futhermore, membrane 1 shows, according to this invention, excellent adherence characteristics on the rolling surfaces usually expected in air springs, to which the membrane itself is associated. In this case, the adherence effects are notably increased by the fact that when the external surface of the terminal cap 3 is brought to a thrusting relation on a stiff surface, a portion of the air enclosed in the pits tends to be expelled by them. In such case, the pits 15 perform substantially like little suction cups, whose action is determined for the purpose of the membrane adherence to the rolling surface.

It is also added to the characteristics above listed that the membrane of the present invention presents excellent working silent qualities. In the known air springs, produced, for example according to the teaching of US patents 3.549.142, 4.564.177 and 4.715.588, the rolling noise was increased by the fact that the transversal grooves, being perpendicularly oriented to the direction of their movement in relation to the rolling surfaces, presented a notable front of impact in relation to the surfaces themselves. In the membrane of the present invention, the ribs 15 show orientations notably diversified among themselves, and in most cases, oblique in relation to the moving direction of the membrane on the rolling surfaces, thus determining an appreciable reduction of the membrane functioning noise in relation to known solutions.

According to this invention, said blow-off means can preferably be provided in combination with the correspective second blow-off 12 canalisation, in connection with the relative extremities portions 9a shown by the inflatable chamber 9 in proximity of each of the terminal caps 3, with a plurality of auxiliary grooves, indicated by broken lines 16 in figure 1. The reciprocal disposition of said auxiliary grooves 16 is substanitally analogue to that of the grooves 13 as predisposed in the mould 6. Said auxiliary grooves 16 are destined to produce, on the terminal caps 3 internal surfaces, auxiliary ribs and auxiliary pits, not shown because they are analogue to ribs 15 and pits 14 as previously described. Therefore, as previously said with reference to the grooves 13 obtained in mould 6, and to the pits 14 and ribs 15, obtained on the terminal caps 3 external surfaces, it is intended fully reported with reference to grooves 16 produced by the inflatable chamber 9 and to the corresponding ribs and pits obtained in membrane 1; the height or protrusion of the ribs and of the grooves can be between 0,4 and 1 mm.

The presence of the auxiliary grooves, obtained for instance during the moulding phase expected in the productive cycle of the inflatable chamber 9, allows for the expulsion, in an extremely efficient way, also of the air which tends to be enclosed between the inflatable chamber itself and the processing membrane 1.

Furthermore, the presence of auxiliary pits and of the auxiliary ribs obtained inside the terminal caps 3, allows for a further increase of the membrane flexibility characteristics while in working conditions.

Even if the invention has been above illustrated with reference to a preferred and illustrative embodiment, it is evident that various modifications and variations could be clear for people skilled in the art, in the light of the above description. So, the spring, for example, could have only one cap defined by ribs as now described and the other cap with a different configuration or a smooth surface.

Accordingly, the invention is intended to embrace all of the alternatives and variations that fall within the scope of the appendent claims.

## Claims

1. Flexible membrane for air springs comprising:
- a central portion (2) with a substantially cylindrical tubular configuration;
- two terminal caps (3) extending, respectively from opposite parts on the continuation of the central portion (2) and presenting each one an arched profile configuration converging towards the geometrical axis of the membrane itself;
characterized by the fact that:
a) at least one of said terminal caps (3) presents an external surface provided with a plurality of pits (14) substantially polygonally-shaped and positioned in sequence and side by side, in contact with each other, each one circumscribed by ribs (15), each one of which is delimited between two extreme vertexes or joining points (15a);
b) the consecutive ribs of contiguous pits along any direction has a progress which is different from a rectilinear line progress;
c) the configuration and setting of the pits is such that, starting from any of these vertexes along any of the directions up to any of the cap extremities, the subsequent ribbing vertexes are substantially external to a rectilinear line, materialising into said any direction, and the sequence of the ribs departing from said vertex towards the extremity takes on a broken line progress.

2. Membrane according to claim 1, characterized by the fact that every rib (15) lets out from said external surface with a height between 0,4 and 0,9 mm, and shows a development of the side of the polygon below 8 mm, and a width between 1 and 3 mm.

3. Membrane according to claims 1 and 2, characterized by the fact that every pit (14) presents a superficial extension comprised between 10 and 20 mm².

4. Membrane according to any of the preceding claims, characterized by the fact that the ratio between the area occupied as a whole by the pits (14) and the area occupied as a whole by the ribs (15) is comprised between 1 and 4.

5. Membrane according to any of the preceding claims, characterized by the fact that each of said pits (14) is substantially formed in an irregular polygon manner, each side of which is defined by one of said ribs (15).

6. Membrane according to any of the preceding claims, characterized by the fact that said ribs define, on the external surface of each cap (3) an irregular reticle design.

7. Membrane according to any of the preceding claims, characterized by the fact that each of said terminal caps (3) presents furthermore an internal surface provided with a plurality of auxiliary pits positioned side by side in sequence and each circumscribed by auxiliary ribs similar and having the same configuration and the same progress of ribs and pits on the external surface.

8. Membrane according to claim 7, characterized by the fact that each auxiliary rib jets out from said internal surface according to a height between 0,4 and 1 mm, and shows a development of the side of the polygon below 8 mm, and a width between 1 and 3 mm.

9. Membrane according to claims 7 and 8, characterized by the fact that each internal pit shows a superficial extension between 10 and 20 mm², and the ratio between the area occupied as a whole by the auxiliary pits and the aria occupied as a whole by the auxiliary ribs is comprised between 1 and 4.

10. Membrane according to any of the preceding claims 7 to 9, characterized by the fact that each of said auxiliary pits is substantially formed like an irregular polygon each side of which is defined by one of said auxiliary ribs.

11. Membrane according to any of the preceding claims 7 to 10, characterized by the fact that said auxiliary ribs define, on the internal surface of each cap, an embossed design like an irregular reticle.

12. Moulding equipment for flexible air springs membrane according to any of the preceding claims, comprising:
- an openable mould (6) inside which is defined a moulding cavity (7), with a central portion (7a) substantially cylindrical or conic, from whose opposite extremities two arched profile terminal portions (7b) converge towards the geometrical axis of the cavity itself;
- a supporting rod (8) extending coaxially through the moulding cavity (7) defined in the openable mould (6);
- a tubular inflatable chamber (9) with the opposite extremities rigidly fixed on the supporting rod (8);
- fluid feed equipment (10) communicating with the interior of the inflatable chamber (9) and prearranged to send to the latter a fluid operational under pressure to lead it from a deflated condition to an inflated one, where the chamber itself acts against a processing membrane (1), previously introduced into the mould (6) to make it adhere to the moulding cavity walls (7):
- first means of air elimination (11) flowing to that moulding cavity (7) in order to evacuate the air interposed between the processing membrane (1) and the cavity walls when the chamber (9) is brought to an inflated condition;
- second means of air elimination (12) to evacuate the air interposed between the inflatable chamber (9) and the processing membrane (1) when the chamber itself is brought to an inflated condition;
characterized by the fact that:
a) in at least one of said terminal portions said elimination means present a plurality of grooves (13), each one of which is delimited between two cross-points;
b) the consecutive grooves, along any direction, have a progress which is different from that of a rectilinear line progress;
c) the configuration and setting of the grooves is such that starting from any of said cross-points along any directions up to any of the extremities of the terminal portions, the successive grooving cross-points are substantially external to a rectilinear line materialising said any direction, and the sequence of the grooves departing from said point in the surrounding area towards the terminal portion extremity, has the progress of a broken line.

13. Equipment according to claim 12, characterized by the fact that each groove (13) has a depth comprised between 0,5 and 0,9 mm, a longitudinal development below 8 mm, and a width between 1 and 3 mm.

14. Equipment according to claims 12 or 13, characterized by the fact that said grooves (13) define, on the surface of each terminal portion (7b), a design like an irregular reticle.

15. Equipment according to any of the preceding claims 12 to 14, characterized by the fact that said second means for air elimination (12) include a plurality of auxiliary grooves (16) distributed in respective extremity portions presented by the inflatable chamber (9) in proximity of each of said terminal caps (3), each auxiliary groove (16) being delimited, in its longitudinal development, between two connecting points, from each of said connecting points depart, according to a broken line course, at least two of said auxiliary grooves (16).

16. Equipment according to claim 15, characterized by the fact that each auxiliary groove (16) presents a depth between 0,4 and 1 mm, a development of the polygon side below 8 mm, and a width comprised between 1 and 3 mm.

## Patentansprüche

1. Flexible Membrane für Luftfedern, umfassend:
- einen mittigen Abschnitt (2) mit einer im wesentlichen rohrförmigen Zylinderausbildung;
- zwei endseitige Kuppen (3), die sich an jeweils abgewandten Seiten auf der Verlängerung des mittigen Abschnittes (2) erstrecken und jeweils eine Ausbildung mit bogenförmigem Profil aufweisen, das in Richtung der geometrischen Achse der Membrane selbst zusammenläuft, dadurch gekennzeichnet, daß
a) mindestens eine dieser endseitigen Kuppen (3) eine Außenfläche aufweist, die mit einer Vielzahl von Zellen (14) versehen ist, die im wesentlichen eine Form von nacheinanderfolgend aneinanderliegenden sich aneinander berührenden Vielecken besitzen, von denen jedes durch Stege (15) umschrieben ist, von denen jeder zwischen zwei Endscheiteln oder Verbindungsstellen (15a) begrenzt ist;
b) die nacheinanderfolgenden, aneinanderliegenden Zellenstege längs einer beliebigen Richtung einen Verlauf besitzen, der von einer Geraden abweicht;
c) die Ausbildung und Anordnung der Zellen derart ist, daß, ausgehend von einem beliebigen dieser Endscheitel längs einer beliebigen Richtung bis zu einem der Enden der Kuppen, die nachfolgenden Stegscheitel im wesentlichen außerhalb einer die beliebige Richtung wiedergebenden Gerade liegen und die vom Scheitel nach außen gehende Reihenfolge der Stege den Verlauf einer unterbrochenen Linie annimmt.

2. Membrane nach Anspruch 1, dadurch gekennzeichnet, daß jeder Steg (15) von der Außenfläche mit einer Höhe zwischen 0,4 und 0,9 mm vorsteht und eine Abwicklung der Seite des Vieleckes aufweist, die unter 8mm liegt, und eine Breite zwischen 1 und 3mm aufweist.

3. Membrane nach Anspruch 1 und 2, dadurch gekennzeichnet, daß jede Zelle (14) eine Oberflächenausdehnung aufweist, die zwischen 10 und 20mm² liegt.

4. Membrane nach einem der vorstehenden Ansprüche, dadurch gekennzeichnet, daß das Verhältnis zwischen der von den Zellen (14) insgesamt beanspruchten Fläche und der von den Stegen (15) insgesamt beanspruchten Fläche zwischen 1 und 4 liegt.

5. Membrane nach einem der vorstehenden Ansprüche, dadurch gekennzeichnet, daß jede der Zellen (14) im wesentlichen als unregelmäßiges Vieleck ausgebildet ist, wobei jedes dessen Seiten durch einen der Stege (15) festgelegt ist.

6. Membrane nach einem der vorstehenden Ansprüche, dadurch gekennzeichnet, daß die Stegen an der Außenfläche an jeder Kuppe (3) ein unregelmäßiges Netzmuster festlegen.

7. Membran nach einem der vorstehenden Ansprüche, dadurch gekennzeichnet, daß jede der Endkuppen (3) überdies eine Innenfläche aufweist, die mit einer Vielzahl von Hilfszellen versehen ist, die nacheinanderfolgend aneinander angereiht und jeweils durch ähnliche Hilsstege umschrieben sind, die dieselbe Ausbildung und dieselbe Abwicklung von Stegen und Zellen auf der Außenfläche besitzen.

8. Membrane nach Anspruch 2, dadurch gekennzeichnet, daß jeder Hilfssteg von der Innenfläche mit einer Höhe vorsteht, die zwischen 0,4 und 1 mm liegt und eine Abwicklung der Seite des Vieleckes aufweist, die unterhalb 8 mm liegt und eine Breite zwischen 1 und 3 mm besitzt.

9. Membrane nach Anspruch 7 und 8, dadurch gekennzeichnet, daß jede Innenzelle eine oberflächenmäßige Ausdehnung zwischen 10 und 20 mm² aufweist, und das Verhältnis zwischen der von den Hilfszellen insgesamt beanspruchten Fläche und der von den Hilfsstegen insgesamt beanspruchten Fläche zwischen 1 und 4 liegt.

10. Membrane nach einem der vorstehenden Ansprüche von 7 bis 9, dadurch gekennzeichnet, daß jede der Hilszellen im wesentlichen als unregelmäßiges Vieleck ausgebildet ist, von dem jede Seite durch einen der Hilfsstege festgelegt ist.

11. Membrane nach einem der vorstehenden Ansprüche von 7 bis 10, dadurch gekennzeichnet, daß die Hilfsstege auf der Innenfläche einer jeden Kuppe ein vorspringendes, unregelmäßiges Netzmuster festlegen.

12. Formgeräe für flexible Membrane für Luftfedern, umfassend:
- eine trennbare Form (6), innerhalb der ein Formhohlraum (7) festgelegt ist, mit einem im wesentlichen zylinderförmigen oder kegelförmigen Abschnitt (7a), von dessen abgewandten Enden zwei Endabschnitte mit Bogenprofil (7b) in Richtung der geometrischen Achse des Hohlraumes selbst zusammenlaufen;
- eine Tragstange (8), die sich koaxial durch den in der trennbaren Form (6) festgelegten Formhohlraum (7) erstreckt;
- eine aufblähbare Rohrkammer (9) mit abgewandten Enden, die starr an der Tragstange (8) befestigt sind;
- eine Mittelzuführeinrichtung (10), die mit dem Inneren der aufblähbaren Kammer (9) verbunden und dazu bereitgestellt ist, um dieser letzteren Arbeitsdruckmittel zuzuführen, um sie vom zusammengezogenen Zustand in einen aufgeblähten Zustand zu bringen, bei der die Kammer selbst gegen eine zu bearbeitende, vorher in der Form (6) eingebrachte Membrane (1) wirkt, um sie gegen die Wendungen des Formhohlraumes (7) zum Anliegen zu bringen;
- erste Luftentweichungsmittel (11), die in den Formhohlraum (7) münden, um die zwischen der zu bearbeitenden Membrane (1) und den Wandungen des Hohlraumes selbst liegende Luft auszutreiben, sobald die Kammer selbst in einen aufgeblähten Zustand gebracht ist,
- zweite Luftentweichungsmittel (12), um die zwischen der aufblähbaren Kammer (9) und der zu bearbeitenden Membrane (1) liegende Luft auszutreiben, sobald die Kammer selbst in einen aufgeblähten Zustand gebracht ist,
dadurch gekennzeichnet, daß
a) in mindestens einem der Endabschnitte die Luftendweichungsmittel eine Vielzahl von Nuten (13) aufweisen, von denen jede zwischen zwei Kreuzstellen begrenzt ist;
b) die längs einer beliebigen Richtung nacheinanderliegenden Nuten einen Verlauf besitzen, der von einer Geraden abweicht;
c) die Ausbildung und die Anordnung der Nuten derart ist, daß ausgehend von einer beliebigen Kreuzstelle längs einer beliebigen Richtung bis einem der Enden der Endabschnitte die aneinanderfolgenden Kreuzstellen der Nuten im wesentlichen außerhalb einer die beliebige Richtung wiedergegebenen Gerade liegen und die von der Stelle in der Umgebungsfläche in der Nähe des Endes des Endabschnittes ausgehende Reihenfolge der Nuten den Verlauf einer unterbrochenen Linie besitzt.

13. Formgerät nach Anspruch 12, dadurch gekennzeichnet, daß jede Nut (13) eine Tiefe zwischen 0,5 und 0,9 mm, eine Längsabwicklung unterhalb von 8 mm und eine Breite zwischen 1 und 3 mm besitzt.

14. Formgerät nach Anspruch 12 oder 13, dadurch gekennzeichnet, daß die Nuten (13) auf der Oberfläche eines jeden Endabschnittes (7b) ein unregelmäßiges Netzmuster festlegen.

15. Formgerät nach einem der vorstehenden Ansprüche von 12 bis 14, dadurch gekennzeichnet, daß die zweiten Luftentweichungsmittel (12) eine Vielzahl von Hilfsnuten (16) umfassen, die in ensprechenden von der aufblähbaren Kammer (9) in der Nähe einer jeden der Endkuppen (3) aufgewiesenen Endabschnitten verteilt sind, wobei jede Hilfsnut (16) in ihrer Längsabwicklung zwischen zwei Verbindungsstellen begrenzt ist, von welchen jeweils gemäß einem Verlauf mit unterbrochener Linie mindestens zwei der Hilfsnuten (16) ausgehen.

16. Formgerät nach Anspruch 15, dadurch gekennzeichnet, daß jede Hilfsnut (16) eine Tiefe zwischen 0,4 und 1 mm, eine Abwicklung der Seite des Vielecks unterhalb von 8 mm und eine Breite zwischen 1 und 3mm aufweist.

## Revendications

1. Membrane flexible pour ressorts à air comprenant:
- une portion centrale (2) ayant une configuration tubulaire sensiblement cylindrique;
- deux calottes terminales (3) s'étendant respectivement des parties opposées sur le prolongement de la portion centrale (2) et présentant chacune une configuration à profil arqué convergeant vers l'axe géométrique de la membrane elle-même;
caractérisée en ce que:
a) l'une au moins desdites calottes terminales (3) présente une surface extérieure pourvue d'une pluralité d'alvéoles ou creux (14) sensiblement de forme polygonale et positionnés en séquence les uns à côté des autres, en contact réciproque, chacun étant circonscrit par des nervures (15) chacune desquelles est délimitée entre deux sommets extrêmes ou point de jonction (15a);
b) les nervures consécutives de creux contigus le long d'une direction quelconque ont un cours qui est différent de celui d'une ligne rectiligne;
c) la configuration et l'arrangement des creux est telle qu'en partant de l'un quelconque des sommets le long d'une direction quelconque jusqu'à l'une des extrémités de la calotte, les sommets subséquents des nervures sont essentiellement extérieurs à une ligne rectiligne concrétisant ladite direction quelconque, et la séquence des nervures sortant dudit sommet vers l'extrémité prend la progression d'une ligne brisée.

2. Membrane selon la revendication 1, caractérisée en ce que chaque nervure (15) fait saillie de ladite surface extérieure suivant une hauteur entre 0,4 et 0,9 mm, et présente une extension du côté du polygone inférieure à 8 mm, et une largeur comprise entre 1 et 3 mm.

3. Membrane selon les revendications 1 et 2, caractérisée en ce que chaque creux (14) présente une extension de surface comprise entre 10 et 20 mm².

4. Membrane selon l'une quelconque des revendications précédentes, caractérisée en ce que le rapport entre l'aire occupée dans son ensemble par les creux (14) et l'aire occupée dans son ensemble par les nervures (15) est compris entre 1 et 4.

5. Membrane selon l'une quelconque des revendications précédentes, caractérisée en ce que chaque creux (14) est essentiellement en forme d'un polygone irrégulier, chaque côté duquel est défini par l'une desdites nervures (15).

6. Membrane selon l'une quelconque des revendications précédentes, caractérisée en ce que lesdites nervures définissent, sur la surface extérieure de chaque calotte (3), un dessin en forme de réseau irrégulier.

7. Membrane selon l'une quelconque des revendications précédentes, caractérisée en ce que chacune desdites calottes terminales (3) présente en outre une surface intérieure pourvue d'une pluralité de creux auxiliaires disposés côte à côte en séquence et chacun circonscrit par des nervures auxiliaires similaires et ayant une configuration et une progression égales à celles des nervures et creux sur la surface extérieure.

8. Membrane selon la revendication 7, caractérisée en ce que chaque nervure auxiliaire fait saillie de ladite surface intérieure suivant une hauteur entre 0,4 et 1 mm, et présente une extension du côté du polygone inférieure à 8 mm, et une largeur comprise entre 1 et 3 mm.

9. Membrane selon les revendications 7 et 8, caractérisée en ce que chaque creux intérieur présente une extension de surface comprise entre 10 et 20 mm² et le rapport entre l'aire occupée dans son ensemble par les creux auxiliaires et l'aire occupée dans son ensemble par les nervures auxiliaires est compris entre 1 et 4.

10. Membrane selon l'une quelconque des revendications précédentes 7 à 9, caractérisée en ce que chacun desdits creux auxiliaires est essentiellement en forme de polygone irrégulier chaque côté duquel est défini par l'une desdites nervures auxiliaires.

11. Membrane selon l'une quelconques des revendications précédentes 7 à 10, caractérisée en ce que lesdites nervures auxiliaires définissent, sur la surface intérieure de chaque calotte, un dessin en relief en forme de réseau irrégulier.

12. Ensemble de moulage pour des membranes flexibles pour ressorts à air suivant l'une quelconque des revendications précédentes, comprenant:
- un moule ouvrant (6) à l'intérieur duquel est définie une cavité de moulage (7), dont une portion centrale (7a) est sensiblement cylindrique ou conique, et à partir des extrémités opposées de laquelle deux portions terminales (7b) à profil arqué convergent vers l'axe géométrique de la cavité elle-même;
- une tige de support (8) s'étendant de manière coaxiale à travers la cavité de moulage (7) définie dans le moule ouvrant (6);
- une chambre tubulaire gonflable (9) dont les extrémités opposées sont fixées rigidement sur la tige de support (8);
- une installation d'alimentation en fluide (10), en communication avec l'intérieur de la chambre gonflable (9) et agencée de manière à envoyer à cette dernière un fluide de travail sous pression pour l'amener de la condition dégonflée à la condition gonflée, où la chambre elle-même agit contre une membrane en cours de travail (1) précédemment introduite dans le moule (6) pour causer son adhésion aux parois de la cavité de moulage (7);
- des premiers moyens d'élimination d'air (11) convergeant dans ladite cavité de moulage (7), en vue d'évacuer l'air interposé entre la membrane en cours de travail (1) et les parois de la cavité quand la chambre (9) est amenée à une condition gonflée;
- des deuxièmes moyens d'élimination d'air (12) pour évacuer l'air interposée entre la chambre gonflée (9) et la membrane en cours de travail (1) quand la chambre elle-même est amenée à une condition gonflée;
caractérisée en ce que:
a) dans au moins l'une desdites portions terminales, lesdits moyens d'élimination d'air présentent une pluralité de rainures (13), chacune desquelles est délimitée entre deux points de croisement;
b) les rainures consécutives, le long de n'importe quelle direction, ont un cours qui est différent de celui du cours d'une ligne rectiligne;
c) la configuration et l'arrangement des rainures est de telle nature qu'à partir de l'un quelconque desdits points de croisement le long d'une direction quelconque jusqu'à l'une des extrémités des portions terminales, les points de croisement subséquents des rainures sont essentiellement extérieurs à une ligne rectiligne se concrétisant dans ladite direction quelconque, et la séquence des rainures sortant dudit point dans l'aire environnante vers l'extrémité de la portion terminale a la progression d'une ligne brisée.

13. Ensemble de moulage selon la revendication 12, caractérisé en ce que chaque rainure (13) a une profondeur comprise entre 0,5 et 0,9 mm, un développement longitudinal inférieur à 8 mm, et une largeur comprise entre 1 et 3 mm.

14. Ensemble selon les revendications 12 ou 13, caractérisé en ce que lesdites rainures (13) définissent, sur la surface de chaque portion terminale (7b), un dessin en forme de réseau irrégulier.

15. Ensemble selon l'une quelconque des revendications 12 à 14, caractérisé en ce que lesdits deuxièmes moyens pour l'élimination d'air (12) comportent une pluralité de rainures irrégulières (16) réparties sur des portions d'extrémité respectives présentées par la chambre gonflable (9) à proximité de chacune desdites calottes terminales (3), chaque rainure auxiliaire (16) étant délimitée, dans son développement longitudinal, entre deux points de liaison, au moins deux desdites rainures auxiliaires (16) ayant la progression d'une ligne brisée sortant de chacun desdits points de liaison.

16. Ensemble selon la revendication 15, caractérisé en ce que chaque rainure auxiliaire (16) présente une profondeur entre 0,4 et 1 mm, un développement du côté du polygone inférieur à 8 mm, et une largeur comprise entre 1 et 3 mm.
